(19) Europäisches Patentamt
European Patent Office
Office européen des brevets

(11) Veröffentlichungsnummer: **0 258 767 B1**

(12) **EUROPÄISCHE PATENTSCHRIFT**

(45) Veröffentlichungstag der Patentschrift: **24.06.92**

(51) Int. Cl.$^5$: **C08G 63/60**, C09K 19/38, C08G 63/68, C08G 73/16

(21) Anmeldenummer: **87112201.6**

(22) Anmeldetag: **22.08.87**

# (54) Vollaromatische thermotrope Polyester.

(30) Priorität: **28.08.86 DE 3629208**

(43) Veröffentlichungstag der Anmeldung: **09.03.88 Patentblatt 88/10**

(45) Bekanntmachung des Hinweises auf die Patenterteilung: **24.06.92 Patentblatt 92/26**

(84) Benannte Vertragsstaaten: **BE DE FR GB NL SE**

(56) Entgegenhaltungen: **EP-A- 0 179 470**

(73) Patentinhaber: **BASF Aktiengesellschaft**
**Carl-Bosch-Strasse 38**
**W-6700 Ludwigshafen(DE)**

(72) Erfinder: **Hisgen, Bernd, Dr.**
**Goethestrasse 6**
**W-6703 Limburgerhof(DE)**
Erfinder: **Kock, Hans-Jakob, Dr.**
**Benckiserstrasse 63**
**W-6700 Ludwigshafen(DE)**
Erfinder: **Portugall, Michael, Dr.**
**Raifeisenstrasse 7**
**W-6706 Wachenheim(DE)**
Erfinder: **Seiler, Erhard, Dr.**
**Erpolzheimer Strasse 1**
**W-6700 Ludwigshafen(DE)**
Erfinder: **Blinne, Gerd, Dr.**
**Im Woogtal 7**
**W-6719 Bobenheim(DE)**

EP 0 258 767 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vollaromatische thermotrope Polyester auf der Basis von

A) 30 bis 60 mol% 4-Hydroxibenzoesäure

B) 20 bis 35 mol% einer Mischung aus

$B_1$) Terephthalsäure,

$B_2$) Isophthalsäure und

$B_3$) 0,5 bis 5 mol% einer Dicarbonsäure der allgemeinen Formel I

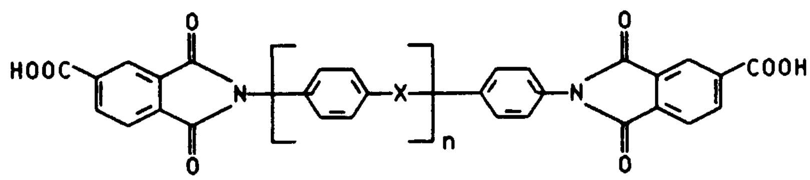

wobei X -O-, -S-, $-SO_2-$, -CO-, $-CH_2-$ oder $-C(CH_3)_2-$ ist, n den Wert 0 oder 1 hat und die beiden Imid-Stickstoffatome in meta- oder para-Stellung zu X stehen, oder deren kernsubstituierten $C_1$-$C_8$-Alkyl-, $C_1$-$C_8$-Alkoxy-, Aryl-, Chlor- oder Bromderivaten und

wobei das molare Verhältnis von $B_1 : B_2$ im Bereich von 1,04:1 bis 19:1 liegt, und

C) 20 bis 35 mol% einer Mischung aus

$C_1$) Hydrochinon

$C_2$) 4,4'-Dihydroxydiphenyl

wobei das molare Verhältnis von $C_1 : C_2$ im Bereich von 0, 1:1 bis 2,67:1 und das molare Verhältnis von B:C im Bereich von 0,9:1 bis 1 , 1:1 liegt und die Summe der molaren Anteile A, $B_1$, $B_2$, $B_3$, $C_1$ und $C_2$ 100 mol% ergibt.

Weiterhin betrifft die Erfindung ein Verfahren zur Herstellung derartiger Polyester und deren Verwendung zur Herstellung von Fasern, Folien und Formkörpern sowie Formkörper, die die erfindungsgemäßen vollaromatischen thermotropen Polyester als wesentliche Komponente enthalten.

Als "thermotrop" bezeichnet man ganz allgemein Substanzen, die flüssigkristalline Schmelzen bilden, d.h. Schmelzen mit anisotropen Eigenschaften.

Thermotrope aromatische Polyester aus aromatischen Dicarbonsäuren und Dihydroxyverbindungen sowie gegebenenfalls aromatischen Hydroxycarbonsäuren sind bekannt und z.B. in der GB-A-2 061 304, der DE-A-20 25 971, der EP-A-33 147 und der EP-A-92 843 beschrieben. Nachteilig an diesen bekannten Systemen ist der Umstand, daß sie in einem komplizierten und zeitaufwendigen mehrstufigen Prozeß hergestellt werden müssen. Auch weisen die Produkte in der Regel Schmelzpunkte oberhalb von 350 °C auf, was die thermoplastische Verarbeitung wesentlich erschwert.

In der DE-A-35 17 587 werden thermoplastische Formmassen beschrieben, die neben einem Grundharz eines Oxibenzoyl-Copolyesters eine kleinere Menge eines polymeren Fließmodifikates enthalten, der aus Terephthalsäure, Isophthalsäure, 4-Hydroxybenzoesäure, Hydrochinon und 4,4'-Dihydroxydiphenyl aufgebaut ist. Die in den Beispielen beschriebenen Fließmodifikatoren weisen zum einen sehr hohe Schmelzpunkte auf (Beispiel 3: mehr als 400 °C) oder zeigen keinen kristallinen Schmelzpunkt, d.h. besitzen nur eine geringe Wärmeformbeständigkeit.

Augabe der vorliegenden Erfindung war es, vollaromatische thermotrope Polyester zur Verfügung zu stellen, die im Vergleich zu den in der DE-A-35 17 587 beschriebenen Fließmodifikatoren leichter thermoplastisch verarbeitet werden können und gleichzeitig eine verbesserte Wärmeformbeständigkeit aufweisen.

Diese Aufgabe wird erfindungsgemäß durch die eingangs definierten vollaromatischen thermotropen Polyester gelöst.

Die erfindungsgemäßen vollaromatischen Polyester bauen sich auf aus Einheiten die sich von 4-Hydroxybenzoesäure (A), Terephthalsäure ($B_1$), Isophthalsäure ($B_2$), einer Dicarbonsäure der allgemeinen Formel I wie eingangs definiert, Hydrochinon ($C_1$) und 4,4'-Dihydroxydiphenyl ($C_2$) ableiten.

Der Anteil der Komponente A liegt im Bereich von 30 bis 60, insbesondere von 35 bis 55 mol% bezogen auf die Summe der Komponenten A, $B_1$, $B_2$, $B_3$, $C_1$ und $C_2$.

Die Komponente B setzt sich zusammen aus Terephthalsäure ($B_1$), Isophthalsäure ($B_2$) und einer aromatischen Dicarbonsäure ($B_3$) der allgemeinen Formel I

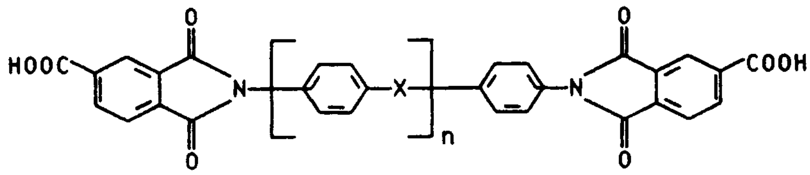

I

wobei X -O-, -S-, $-SO_2-$, -CO-, $-CH_2-$ oder $-C(CH_3)_2-$ ist, n den Wert 0 oder 1 hat und die beiden Imid-Stickstoffatome in meta-oder para-Stellung zu X stehen.

Anstelle der unsubstituierten Dicarbonsäuren können auch deren $C_1$-$C_8$-Alkyl-, $C_1$-$C_8$-Alkoxy-, Aryl-, Chlor- oder Bromderivate eingesetzt werden.

Beispiele solcher Verbindungen sind

1,4-Di-(4-carboxy-N-phthalimido)benzol Ia

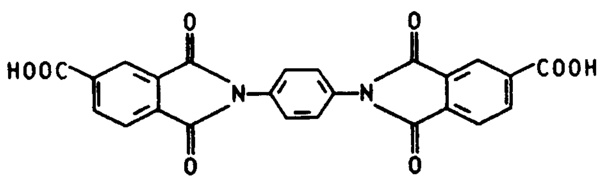

(Ia)

4,4'-Di-[(4-carboxy)-N-phthalimido]diphenylmethan Ib
4,4'-Di-[(4-carboxy)-N-phthalimido]diphenylsulfon Ic
2,2-Di-(4,4'-di[(4-carboxy)-N-phthalimido]diphenylpropan Id
4,4'-Di-[(4-carboxy)-N-phthalimido]diphenylether Ie
4,4'-Di-[4-carboxy)-N-phthalimido]benzophenon If

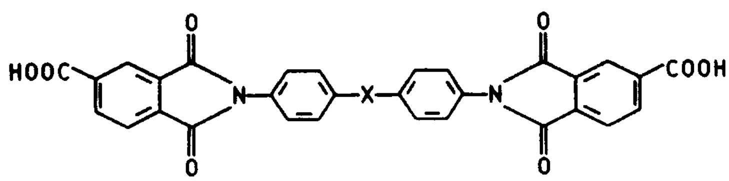

| | Ib | Ic | Id | Ie | If |
|---|---|---|---|---|---|
| X | $-CH_2-$ | $-SO_2-$ | $-C(CH_3)_2$ | -O- | -CO- |

oder deren kernsubstituierte $C_1$-$C_8$-Alkyl-, $C_1$-$C_8$-Alkoxy-, Aryl-, Chlor- oder Bromderivate.

Neben diesen Verbindungen, in denen die Imid-Stickstoffatome sich stets in para-Stellung zum Substituenten X befinden, sind auch die entsprechenden meta-substituierten Verbindungen oder solche in denen eine meta- oder para-Substitution von Imid-Stickstoffatomen und X vorliegt, einsetzbar.

Der Anteil der Komponente $B_3$ beträgt 0,5 bis 5, vorzugsweise 1 bis 4 mol% bezogen auf die Summe der Komponenten A, $B_1$, $B_2$, $B_3$, $C_1$ und $C_2$.

Das molare Verhältnis der Komponenten $B_1$:$B_2$, d.h. von Terephthalsäure zu Isophthalsäure liegt im Bereich von 1,04:1 bis 19:1, vorzugsweise von 1,5:1 bis 10:1.

Der Anteil der Gesamtkomponente B beträgt 20 bis 35, vorzugsweise 22,5 bis 32,5 mol% bezogen auf die Summe der Komponenten A, $B_1$, $B_2$, $B_3$, $C_1$ und $C_2$.

Das molare Verhältnis von Hydrochinon ($C_1$) zu 4,4'-Dihydroxydiphenyl ($C_2$) liegt im Bereich von 0,1:1 bis 2,67:1, insbesondere von 0,5:1 bis 2,33:1 und der Anteil der Komponente C beträgt 20 bis 35 mol%, insbesondere 22,5 bis 32,5 mol% bezogen auf die Summe der Komponenten A, $B_1$, $B_2$, $B_3$, $C_1$ und $C_2$.

Der thermotrope, d.h. flüssig-kristalline Zustand der erfindungsgemäßen vollaromatischen Polyester kann z.B. mit dem Polarisationsmikroskop nach einer in der DE-OS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Der Schmelzpunkt der erfindungsgemäßen Polyester liegt in der Regel im Bereich von 280 bis 350, insbesondere von 300 bis 350 ° C.

Die Wärmeformbeständigkeit, bestimmt nach ISO/R75, Methode A, ist im allgemeinen größer als 180 ° C, insbesondere größer als 200 ° C. Nach ISO/R75, Methode B, ist die Wärmeformbeständigkeit größer als 200 ° C, insbesondere größer als 250 ° C.

Der Schubmodul, bestimmt nach DIN 53 445, beträgt bei 200 ° C im allgemeinen mindestens 25 %, insbesondere mindestens noch 28 % des bei 20 ° C unter sonst gleichen Bedingungen gemessenen Wertes.

Die relative Viskosität der erfindungsgemäßen vollaromatischen Polyester, bestimmt in 0,1 gew.%iger Lösung in Pentafluorphenol bei 60 ° C, liegt vorzugsweise im Bereich von 1 bis 4, insbesondere von 1,5 bis 3,5 dl/g.

Die erfindungsgemäßen thermotropen Polyester lassen sich prinzipiell nach an sich bekannten Verfahren herstellen, wie sie z.B. in der US-A-4 375 530 und 4 118 372 beschrieben werden.

Vorteilhafterweise wird ein Verfahren angewandt, bei dem man die Ausgangsstoffe A, $B_1$, $B_2$, $B_3$, $C_1$ und $C_2$ in Gegenwart eines 5- bis 60 %igen molaren Überschusses eines Anhydrids einer Alkancarbonsäure mit 2 bis 6 C-Atomen einer einstufigen Polykondensation in der Schmelze unterwirft. Der molare Überschuß an Anhydrid bezieht sich dabei auf den Gesamtgehalt an OH-Gruppen in der Monomermischung.

Von den Anhydriden der Alkancarbonsäuren mit 2 bis 6 C-Atomen werden Essigsäureanhydrid, Propionsäureanhydrid und Buttersäureanhydrid, und ganz besonders Essigsäureanhydrid bevorzugt. Der molare Überschuß an Säureanhydrid beträgt vorzugsweise 10 bis 50 mol%.

Es hat sich auch als vorteilhaft herausgestellt, die Umsetzung unter Inertgasatmosphäre, z.B. Stickstoff oder Argon, durchzuführen.

Manchmal ist es vorteilhaft, durch Verwendung von Katalysatoren, z.B. solchen wie sie in der EP-A-131 846 beschrieben werden, die Umsetzung zu beschleunigen. In diesem Fall beträgt der Anteil dieser Katalysatoren 0,001 bis 1 Gew.%, bezogen auf die Gesamtmenge der eingesetzten Monomeren.

Im folgenden wird eine besonders bevorzugte Ausführungsform eines Verfahrens beschrieben.

Die Monomeren A, $B_1$, $B_2$, $B_3$, $C_1$ und $C_2$ und das Carbonsäureanhydrid werden unter Inertgasatmosphäre vermischt und unter Rühren bis zum Rückfluß erhitzt. Dabei ist es vorteilhaft, die Temperatur stufenweise zu steigern indem man zunächst bis zu 5 Stunden, vorzugsweise bis zu 2 Stunden bei einer Temperatur von 130 bis 200 ° C hält und anschließend die Temperatur vorzugsweise innerhalb eines Zeitraums von 2 bis 2,5 Stunden auf 250 bis 370 ° C erhöht. Dabei werden im Verlauf der Reaktion überschüssiges Carbonsäureanhydrid und gebildete Carbonsäuren abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen vollaromatischen Polyester können anschließend einer Nachkondensation in fester Phase unterworfen werden. Diese wird vorzugsweise bei Temperaturen im Bereich von 200 bis 300 ° C, vorzugsweise von 200 bis 280 ° C, vorgenommen. Es ist auch möglich, die Nachkondensation in fester Phase nach einer thermoplastischen Verarbeitung vorzunehmen.

Vorteilhafterweise wird auch die Kondensation in fester Phase in Inertgasatmosphäre, z.B. unter Stickstoff oder Argon, durchgeführt.

Das vorstehend beschriebene Verfahren zeichnet sich dadurch aus, daß in einer Stufe in einer relativ kurzen Zeit vollaromatische Polyester mit vorteilhaften Eigenschaften erhalten werden.

Den erfindungsgemäßen vollaromatischen Polyestern können übliche Zusatzstoffe und Verarbeitungshilfsmittel zugesetzt werden. Hier seien nur Stabilisatoren gegen Oxidation, Wärme, UV-Licht, Gleit- und Entformungsmittel, Farbstoffe und Pigmente, faser- oder pulverförmige Füllstoffe und Verstärkungsmittel, Keimbildungsmittel, Nukleierungsmittel, oder Weichmacher genannt. Derartige Zusätze sind an sich bekannt und in der Literatur beschrieben.

Als Beispiele für Oxidationsverzögerer und Wärmestabilisatoren seien nur Halogenide von Metallen der Gruppe I des Periodensystems, gegebenenfalls in Abmischung mit Kupfer-I-halogeniden oder sterisch gehinderten Phenolen in Konzentrationen bis zu 1 Gew.% angeführt.

Als UV-Stabilisatoren sind substituierte Resorcine, Salicylate, Benzotriazole, Benzophenone sowie deren Mischungen geeignet, die im allgemeinen in Mengen bis zu 2 Gew.% zugesetzt werden.

Farbstoffe und Pigmente werden im allgemeinen in Mengen bis zu 5 Gew.% eingesetzt. Als Beispiele seien Nigrosin, Titandioxid, Cadmiumsulfid, Phthalocyaninfarbstoffe, Ultramarinblau oder Ruß genannt.

Füllstoffe und Verstärkungsmittel sind beispielsweise Kohlenstoffasern, Glasfasern, amorphe Kieselsäure, Calciumsilikat, Aluminiumsilikat, Magnesiumcarbonat, Kaolin, Kreide, gepulverter Quarz, Glimmer und Feldspat die bis zu 70 Gew.%, bezogen auf das Gesamtgewicht der gefüllten Masse ausmachen können.

Als Keimbildungsmittel seien Talkum, Calcuimfluorid, Natriumphenylphosphinat, Aluminiumoxid und

feinteiliges Polytetrafluorethylen genannt.

Weiterhin können biz zu 20 Gew.% Weichmacher wie Phthalsäureester, Kohlenwasserstofföle und Sulfonamide eingesetzt werden.

Die erfindungsgemäßen vollaromatischen Polyester und die daraus erhältichen Formkörper weisen eine hervorragende Wärmeformbeständigkeit und eine glatte, glänzende und abriebfeste Oberfläche bei heller Eigenfarbe auf. Außerdem sind sie weitgehend chemikalienbeständig, schwer entflammbar und besitzen eine für Polyester ausgezeichnete Hydrolysestabilität.

Aus den erfindungsgemäßen vollaromatischen Polyestern hergestellte Formkörper zeichnen sich durch hervorragende mechanische Eigenschaften, insbesondere Steifigkeit, Festigkeit und Zähigkeit aus. Die vollaromatischen Polyester eignen sich daher besonders zur Herstellung von Formkörpern für die Elektro- und Datentechnik, den Fahrzeugbau und andere technische Bereiche.

Daneben können aus den erfindungsgemäßen Polyestern Fasern und Folien mit einem guten Eigenschaftsspektrum hergestellt werden.

Die Verarbeitung der erfindungsgemäßen Polyester kann in der Regel bei Temperaturen von unterhalb 370 ° C durch Spritzguß, Pressen oder Extrusion erfolgen.

Beispiel 1

Zur Herstellung eines erfindungsgemäßen Polyesters wurden folgende Komponenten eingesetzt:

4,5 mol (42,85 mol%) 4-Hydroxibenzoesäure
2,4 mol (22,88 mol%) Terephthalsäure
0,3 mol ( 2,85 mol%) Isophthalsäure
0,3 mol ( 2,85 mol%) 4,4′-Di(4-carboxy-N-phthalimido)diphenylmethan
1,8 mol (17,14 mol%) Hydrochinon und
1,2 mol (11,43 mol%) 4,4′-Dihydroxidiphenyl

Diese Komponenten wurden zusammen mit 1330 ml (14,1 mol) Essigsäureanhydrid in einem 5 l-Reaktionskessel unter Stickstoff vorgelegt. Unter Rühren wurde innerhalb von 30 min auf 150 ° C, anschließend innerhalb von 150 min auf 350 ° C Außentemperatur erhitzt. Im Anschluß daran wurde der Druck auf 800 mbar und im weiteren Verlauf jeweils innerhalb von 10 min auf die Hälfte des vorherigen Wertes reduziert. Die Außentemperatur wurde dabei auf 360 ° C erhöht.

Der Enddruck betrug 40 mbar nach einer Gesamtreaktionszeit von 230 min.

Die inhärente Viskosität des erhaltenen Polyesters betrug 2,9 dl/g, gemessen in 0,1 gew.%iger Lösung in Pentafluorphenol bei 60 ° C.

Der Polyester bildete eine fadenbildende mesomorphe Schmelze.

Aus DSC-Messungen (Differential Scanning Calorimetry) ergab sich ein Schmelzpunkt von 335 ° C.

Das Polymere ließ sich bei 360 ° C problemlos im Spritzguß verarbeiten.

Die Wärmeformbeständigkeit nach ISO/R75 betrug nach Methode B mehr als 250 ° C.

Der Schubmodul nach DIN 53 445 bei 200 ° C betrug noch 28 % des unter sonst indentischen Bedingungen bei 20 ° C gemessenen Wertes.

Beispiel 2

Es wurden folgende Komponenten eingesetzt:

4,5 mol (42,85 mol%) 4-Hydroxibenzoesäure
2,4 mol (22,89 mol%) Terephthalsäure
0,3 mol ( 2,85 mol%) Isophthalsäure
0,3 mol ( 2,85 mol%) 4,4′-Di[(4-carboxy)-N-phthalimido]diphenylsulfon
1,8 mol (17,13 mol%) Hydrochinon und
1,2 mol (11,43 mol%) 4,4′-Dihydroxydiphenyl

Die Ausgangsverbindungen wurden zusammen mit 1330 ml (14,1 mol) Essigsäureanhydrid vermischt und wie in Beispiel 1 beschrieben umgesetzt.

Die Endtemperatur betrug 360 ° C und der Enddruck 65 mbar.

Die inhärente Viskosität wurde zu 2,3 dl/g, bestimmt wie in Beispiel 1, gemessen.

Der Schmelzpunkt (aus DSC-Messungen) lag bei 315 ° C.

Das Polymere ließ sich bei 340 ° C problemlos im Spritzguß verarbeiten; die Wärmeformbeständigkeit nach ISO/R75 betrug nach Methode B mehr als 250 ° C.

Der Schubmodul nach DIN 53 445 betrug bei 200 ° C noch 32 % des unter sonst identischen Bedingungen bei 20 ° C gemessenen Wertes.

Vergleichsbeispiel 1 (Beispiel 3 der DE-OS 35 17 587)

Es wurden folgende Komponenten eingesetzt:
0,306 mol (50 mol%) 4-Hydroxybenzoesäure
0,134 mol (21,85 mol%) Terephthalsäure
0,019 mol ( 3,03 mol%) Isophthalsäure und
0,154 mol (25,12 mol%) 4,4′-Dihydroxydiphenyl

Die Komponenten wurden mit 67,4 ml Essigsäureanhydrid wie in Beispiel 1 beschrieben umgesetzt.

Die Endtemperatur außen betrug 360 ° C, der Enddruck 8 mbar.

Im Gegensatz zu den Beispielen 1 bis 6, in denen nach der Reaktion eine fadenbildende mesomorphe Schmelze erhalten wurde, war das Reaktionsprodukt in diesem Fall fest und besaß eine grau-gelbe Farbe.

Das Polymere konnte bis 400 ° C nicht geschmolzen werden und war in Pentafluorphenol unlöslich, so daß auch keine relativ Viskosität bestimmt werden konnte.

Ein nach dem Verfahren in der DE-A-35 17 587 (Beispiel 3) hergestelltes Produkt der gleichen Zusammensetzung war ebenfalls bis 400 ° C nicht schmelzbar und damit unterhalb dieser Temperatur thermoplastisch nicht zu verarbeiten.

Vergleichsbeispiel 2 (Beispiel 4 aus DE-A-35 17 587)

Es wurden folgende Komponenten eingesetzt:
0,37 mol (64,92 mol%) 4-Hydroxybenzoesäure
0,1 mol (17,54 mol%) Isophthalsäure und
0,1 mol (17,54 mol%) 4,4′-Dihydroxydiphenyl

Die Komponenten wurden mit 62 ml Essigsäureanhydrid wie in Beispiel 1 beschrieben umgesetzt.

Die Endtemperatur betrug in diesem Fall 330 ° C, der Enddruck 53 mbar.

Die inhärente Viskosität des erhaltenen Produkts betrug 1,9 dl/g, und das Polymere zeigte ein gute Fadenbildungstendenz aus der anisotropen Schmelze.

Der Schubmodul nach DIN 53 445 betrug bei 200 ° C jedoch lediglich noch 0,6 % des unter sonst identischen Bedingungen bei 20 ° C gemessenen Werts.

Die vorstehenden Beispiele zeigen, daß sich die erfindungsgemäßen vollaromatischen Polyester insbesondere im Vergleich zu den aus der DE-A-35 17 587 bekannten Produkten durch ein insgesamt wesentlich verbessertes Eigenschaftsspektrum auszeichnen.

**Patentansprüche**

**1.** Vollaromatische thermotrope Polyester auf der Basis von

A) 30 bis 60 mol% 4-Hydroxibenzoesäure

B) 20 bis 35 mol% einer Mischung aus

$B_1$) Terephthalsäure und

$B_2$) Isophthalsäure

$B_3$) 0,5 bis 5 mol% einer Dicarbonsäure der allgemeinen Formel I

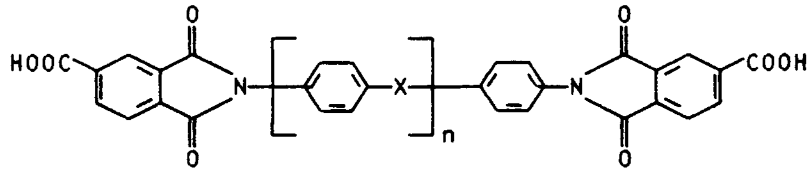

wobei X -O-, -S-, $-SO_2-$, -CO-, $-CH_2-$ oder $-C(CH_3)_2-$ ist, n den Wert 0 oder 1 hat und die beiden Imid-Stickstoffatome in meta-oder para-Stellung zu X stehen, oder deren kernsubstituierten $C_1$-$C_8$ -Alkyl-, $C_1$-$C_8$-Alkoxy-, Aryl-, Chlor- oder Bromderivaten und

wobei das molare Verhältnis von $B_1$ : $B_2$ im Bereich von 1,04:1 bis 19:1 liegt, und

C) 20 bis 35 mol% einer Mischung aus

$C_1$) Hydrochinon

$C_2$) 4,4′-Dihydroxydiphenyl

wobei das molare Verhältnis von $C_1$ : $C_2$ im Bereich von 0,1:1 bis 2,67:1 und das molare Verhältnis

von B:C im Bereich von 0,9:1 bis 1,1:1 liegt, und die Summe der molaren Anteile A, $B_1$, $B_2$, $B_3$, $C_1$ und $C_2$ 100 mol.% ergibt.

**2.** Vollaromatische thermotrope Polyester nach Anspruch 1, dadurch gekennzeichnet, daß das molare Verhältnis der Komponenten $B_1$:$B_2$ im Bereich von 1,5:1 bis 10:1 liegt.

**3.** Vollaromatische thermotrope Polyester nach den Ansprüchen 1 und 2, dadurch gekennzeichnet, daß das molare Verhältnis der Komponenten $C_1$ : $C_2$ im Bereich von 0,5:1 bis 2,33:1 liegt.

**4.** Vollaromatische thermotrope Polyester nach den Ansprüchen 1 bis 3, dadurch gekennzeichnet, daß der Anteil der Komponente $B_3$ 1 bis 4 mol% beträgt bezogen auf die Summe der molaren Anteile A, $B_1$, $B_2$, $B_3$, $C_1$ und $C_2$

**5.** Vollaromatische thermotrope Polyester nach den Ansprüchen 1 bis 4, erhältlich durch einstufige Polykondensation der Komponenten A, $B_1$, $B_2$, $B_3$, $C_1$ und $C_2$ in der Schmelze in Gegenwart eines 5 bis 60 %igen molaren Überschusses, bezogen auf den Gesamtgehalt an OH-Gruppen, von Anhydriden von Alkancarbonsäuren mit 2 bis 6 C-Atomen.

**6.** Verfahren zur Herstellung von vollaromatischen thermotropen Polyestern gemäß den Ansprüchen 1 bis 5 durch einstufige Polykondensation in der Schmelze in Gegenwart von Anhydriden von Alkancarbonsäuren mit 2 bis 6 C-Atomen, dadurch gekennzeichnet, daß man

a) die Komponenten A, $B_1$, $B_2$, $B_3$, $C_1$ und $C_2$ in Gegenwart eines 5 bis 60 %igen molaren Überschusses, bezogen auf den Gesamtgehalt an OH-Gruppen, der Andhydride der Alkancarbonsäuren umsetzt und, gegebenenfalls,

b) die erhaltenen Produkte einer Nachkondensation in fester Phase unterwirft.

**7.** Verwendung der vollaromatischen thermotropen Polyester gemäß den Ansprüchen 1 bis 5 oder wie nach Anspruch 6 erhalten zur Herstellung von Fasern, Fäden, Folien und Formkörpern.

**8.** Dimensionsstabile Formkörper, aus vollaromatischen thermotropen Polyeseter gemäß den Ansprüchen 1 bis 5 oder wie nach Anspruch 6 erhalten sowie gegebenenfalls Zusatzstoffen und Verarbeitungshiefsmitteln.

## Claims

**1.** A fully aromatic thermotropic polyester based on

A) from 30 to 60 mol % of 4-hydroxybenzoic acid,

B) from 20 to 35 mol % of a mixture of

$B_1$) terephthalic acid,

$B_2$) isophthalic acid and

$B_3$) from 0.5 to 5 mol % of a dicarboxylic acid of the formula I

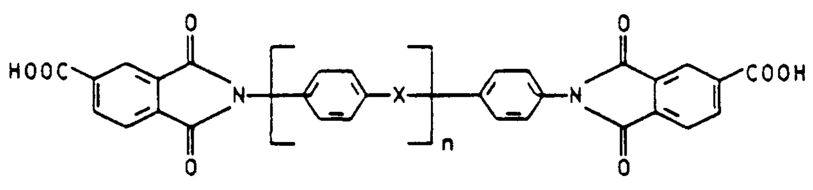

where X is -O-, -S-, $-SO_2-$, -CO-, $-CH_2-$ or $-C(CH_3)_2-$, n is 0 or 1 and the two imide nitrogen atoms are meta or para to X, or its $C_1$-$C_8$-alkyl, $C_1$-$C_8$-alkoxy, aryl, chlorine or bromine derivatives which are substituted in the nucleus,

the molar ratio of $B_1$ to $B_2$ being from 1.04:1 to 19:1, and

C) from 20 to 35 mol % of a mixture of

$C_1$) hydroquinone and

$C_2$) 4,4'-dihydroxydiphenyl,

the molar ratio of $C_1$ to $C_2$ being from 0.1:1 to 2.67:1 and the molar ratio of B to C being from 0.9:1 to 1.1:1, and the sum of the molar proportions A, $B_1$, $B_2$, $B_3$, $C_1$ and $C_2$ being 100 mol %.

**2.** A fully aromatic thermotropic polyester as claimed in claim 1, wherein the molar ratio of the components $B_1$ to $B_2$ is from 1.5:1 to 10:1.

**3.** A fully aromatic thermotropic polyester as claimed in claim 1 or 2, wherein the molar ratio of the components $C_1$ to $C_2$ is from 0.5:1 to 2.33:1.

**4.** A fully aromatic thermotropic polyester as claimed in any of claims 1 - 3, wherein the amount of component $B_3$ is from 1 to 4 mol %, based on the sum of the molar proportions A, $B_1$, $B_2$, $B_3$, $C_1$ and $C_2$.

**5.** A fully aromatic thermotropic polyester as claimed in any of claims 1 to 4, obtainable by single-stage polycondensation of components A, $B_1$, $B_2$, $B_3$, $C_1$ and $C_2$ in the melt, in the presence of a 5-60% molar excess, based on the total content of OH groups, of an anhydride of an alkanecarboxylic acid of 2 to 6 carbon atoms.

**6.** A process for the preparation of a fully aromatic thermotropic polyester as claimed in any of claims 1 to 5 by single-stage polycondensation in the melt, in the presence of an anhydride of an alkanecarboxylic acid of 2 to 6 carbon atoms, wherein

a) components A, $B_1$, $B_2$, $B_3$, $C_1$ and $C_2$ are reacted in the presence of a 5-60% molar excess, based on the total content of OH groups, of the anhydride of the alkanecarboxylic acid, and, where appropriate,

b) the resulting product is subjected to postcondensation in the solid phase.

**7.** Use of a fully aromatic thermotropic polyester as claimed in any of claims 1 to 5 or obtained as claimed in claim 6 for the production of fibers, filaments, films and moldings.

**8.** A dimensionally stable molding comprising fully aromatic thermotropic polyesters as claimed in any of claims 1 to 5 or obtained as claimed in claim 6 as well as, if desired, additives and processing assistants.

**Revendications**

**1.** Polyesters thermotropes entièrement aromatiques à base de

A) 30 à 60 % en moles d'acide 4-hydroxybenzoïque

B) 20 à 35 % en moles d'un mélange de

$B_1$) acide téréphtalique et

$B_2$) acide isophtalique

$B_3$) 0,5 à 5 % en moles d'un acide dicarboxylique de la formule générale I

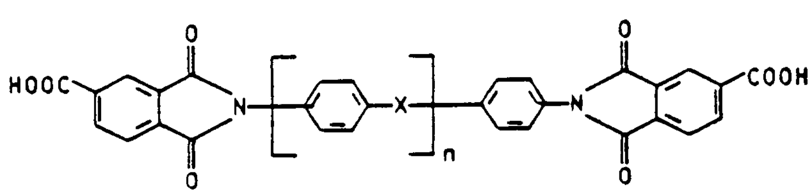

dans laquelle X est -O-, -S-, $-SO_2-$, -CO-, $-CH_2-$ ou $-C(CH_3)_2-$, n a la valeur 0 ou 1 et les deux atomes d'azote imidiques sont en position méta ou para par rapport à X, ou de dérives de cet acide dicarboxylique substitués sur le noyau par des radicaux alkyle, en $C_1$-$C_8$, alcoxy en $C_1$-$C_8$, aryle, chloro ou bromo,

le rapport molaire de $B_1$ à $B_2$ étant dans la gamme de 1,04:1 à 19:1,

C) 20 à 35 % en moles d'un mélange de

$C_1$) hydroquinone

$C_2$) 4,4'-dihydroxybiphényle,

le rapport molaire de $C_1$ à $C_2$ étant dans la gamme de 0,1:1 à 2,67:1 et le rapport molaire de B à C étant dans la gamme de 0,9:1 à 1,1:1, et la somme des fractions molaires A, $B_1$, $B_2$, $B_3$, $C_1$ et $C_2$ étant de 100 % en moles.

**2.** Polyesters thermotropes entièrement aromatiques suivant la revendication 1, caractérisés en ce que le rapport molaire des composants $B_1$:$B_2$ est dans la gamme de 1,5:1 à 10:1.

**3.** Polyesters thermotropes entièrement aromatiques suivant la revendication 1 ou 2, caractérisés en ce que le rapport molaire des composants $C_1$:$C_2$ est dans la gamme de 0,5:1 à 2,33:1.

**4.** Polyesters thermotropes entièrement aromatiques suivant l'une quelconque des revendications 1 à 3, caractérisés en ce que la fraction des composants $B_3$ est de 1 à 4 % en moles par rapport à la somme des fractions molaires A, $B_1$, $B_2$, $B_3$, $C_1$ et $C_2$.

**5.** Polyesters thermotropes entièrement aromatiques suivant l'une quelconque des revendications 1 à 4, pouvant être obtenus par polycondensation en une étape des composants A, $B_1$, $B_2$, $B_3$, $C_1$ et $C_2$, à l'état fondu, en présence d'un excès molaire de 5 à 60 %, par rapport à la teneur totale en groupes OH, d'anhydrides d'acides alcanecarboxyliques contenant 2 à 6 atomes de carbone.

**6.** Procédé de préparation de polyesters thermotropes entièrement aromatiques suivant l'une quelconque des revendications 1 à 5, par polycondensation en une étape, à l'état fondu, en présence d'anhydrides d'acides alcanecarboxyliques contenant 2 à 6 atomes de carbone, caractérisé en ce que

a) on fait réagir les composants A, $B_1$, $B_2$, $B_3$, $C_1$ et $C_2$ en présence d'un excès molaire de 5 à 60 %, par rapport à la teneur totale en groupes OH, des anhydrides d'acides alcanecarboxyliques et, éventuellement,

b) on soumet les produits obtenus à une condensation subséquente en phase solide.

**7.** Utilisation des polyesters thermotropes entièrement aromatiques suivant l'une quelconque des revendications 1 à 5 ou tels qu'obtenus suivant la revendication 6 pour la fabrication de fibres, fils, feuilles et corps moulés.

**8.** Corps moulés de dimensions stables, obtenus à partir des polyesters thermotropes entièrement aromatiques suivant l'une quelconque des revendications 1 à 5 ou tels qu'obtenus suivant la revendication 6 et aussi éventuellement à partir d'additifs et d'adjuvants de traitement des polyesters.